Europäisches Patentamt

**European Patent Office**

**Office européen des brevets**

(11) Publication number: **0 215 632**
**A2**

# EUROPEAN PATENT APPLICATION

(21) Application number: **86306954.8**

(22) Date of filing: **10.09.86**

(51) Int. Cl.⁴: **B 29 C 47/02,** B 29 C 47/28,
H 01 B 7/18
// B29K105:08, B29K105:22

(30) Priority: **16.09.85 NO 853615**

(43) Date of publication of application: **25.03.87**
**Bulletin 87/13**

(84) Designated Contracting States: **DE FR GB IT**

(71) Applicant: **International Standard Electric Corporation,**
**320 Park Avenue, New York New York 10022 (US)**

(72) Inventor: **Hanssen, Karl Otto, Bolerbakken 2,**
**N-0690 Oslo 6 (NO)**

(74) Representative: **Ruffhead, Philip Geoffrey, ITT-UK**
**Patent Department Maidstone Road Foots Cray, Sidcup**
**DA14 5HT (GB)**

(54) **Reinforced cable.**

(57) Method and apparatus for making a cable (16) having reinforcement elements embedded in a protective outer sheath (17) of plastics/rubber by using a sheath extruder. The reinforcement elements are arranged around the cable core in the form of a braid (10) having open masks, at the same time as the cable core is entering the extruder head (1), the braid (10) is supported within the extruder head so that it is somewhat larger in diameter than the cable core, and the plastics/rubber mass is applied to the extrusion area with a pressure high enough to allow parts of the mass to flow through the mask and fully embed the braid (10) within the sheath (17).

# REINFORCED CABLE

The present invention relates to a method as well as apparatus for making a cable having reinforcement elements embedded in a protective outer sheath of plastics/rubber by using a sheath extruder.

Problems are normally encountered in completely embedding reinforcement elements in an extruded sheath. This is true particularly where reinforcement braids are concerned.

In German DOS No. 2.454.685 there is described a cable having outer layers including a braid-like reinforcement structure. This structure is made up of two sets of reinforcement elements one set being parallel with the cable axis and the other set being interwoven with the first set at substantial right angles to that set. At least some of the elements are conductive and/or semiconductive so as to offer electrostatic or electromagnetic screening in addition to the longutidinal strain reinforcement. The braid-like structure which is prefabricated, is arranged on top of a first outer sheath and a second outer sheath is extruded over the braid. One drawback with this construction is that the braid preferably should be undulated, or at least the longitudinal elements of the braid. As a result the outer construction of the cable will not be capable of relieving strain in the cable core. In the case of optical fibre cables it is essential that the core is fully relieved from strain. Another drawback is that whereas the braid is not fully embedded within one of the outer sheaths, the risk of separation of the braid from the two sheaths may cause trouble when the cable is handled and installed.

Various kind of braids are known from other cable patent specifications such as U.S. Pat. No. 2.111.229, DE-AS 1.256.287 and DE-OS 2.222.542.

The basic drawback of all these known cables is that the braid is not fully embedded within an outer sheath.

An object of the present invention is to provide a method and apparatus which overcome the drawbacks of previous processes.

According to the invention in its broadest aspect, a method of making a cable having reinforcement elements embedded in a protective outer sheath of plastics/rubber by using a sheath extruder, is characterised in that the reinforcement elements are arranged around the cable core in the form of a braid having open masks, at the same time as the cable core is entering the extruder head, that the braid is supported within the extruder head so that it is somewhat larger in diameter than the cable core, and that the plastics/rubber mass is applied to the extrusion area with a pressure high enough to allow parts of the mass to flow through the masks and fully embed the braid within the sheath.

Embodiments of the invention will now be described by way of example with reference to the accompanying drawings in which:-

Figure 1 schematically shows an apparatus for making a reinforced cable,

Figures 2, 3 and 4 illustrate some alternative cable cross-sections,

Figures 5 and 6 illustrate braid configurations, and

Figures 7, 8 and 9 illustrate in more detail the extrusion area, and

Figures 10-13 illustrate an alternative configuration of the extrusion area.

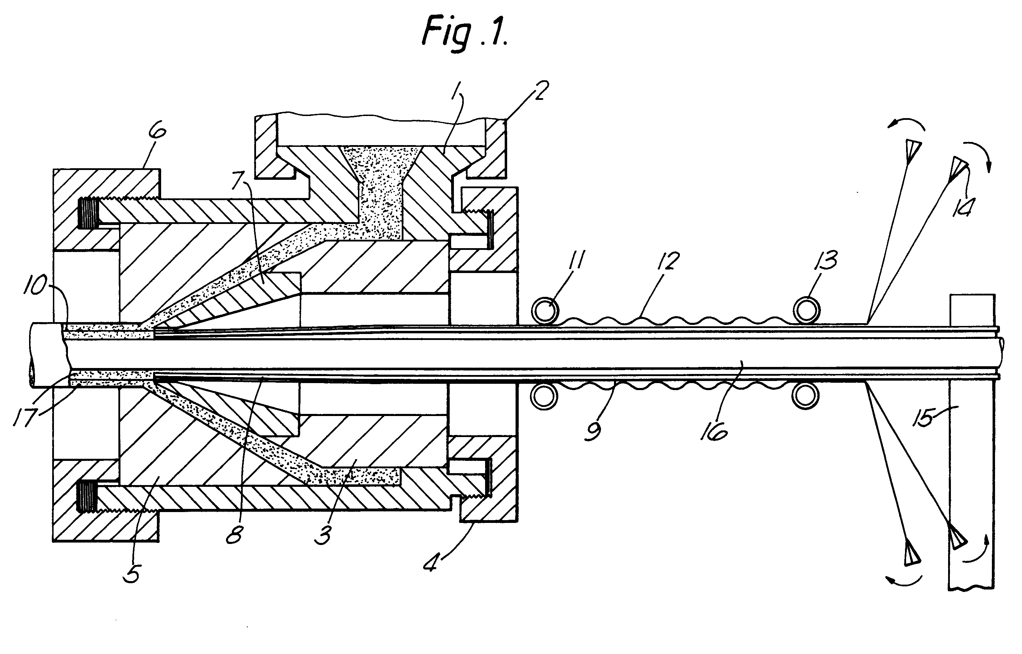

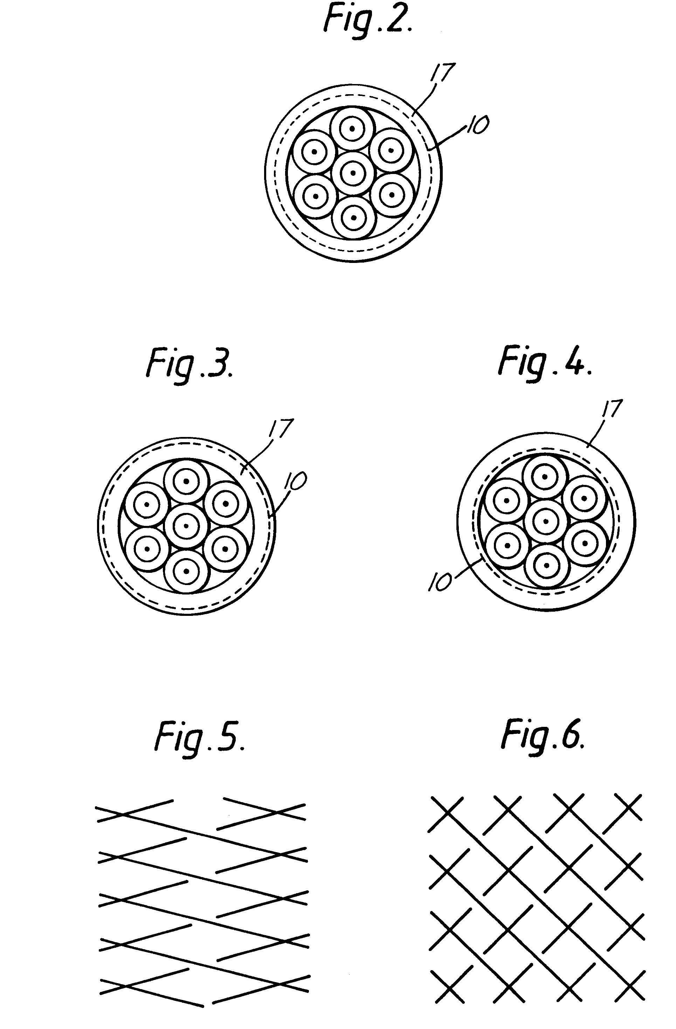

Figure 1 illustrates an apparatus for making a reinforced cable. The extruder head 1 is mounted on the front of an extruder by means of extruder head fixing means 2. Extruded material from an extruder cylinder (not shown) is guided into the extruder head 1 and is distributed symmetrically around a cable core 16 by means of a mass distributor 3. An inner die 7 which is secured to the mass distributor 3 and an outer die 5 which is mounted in front of the extruder head 1 are so designed that the positioning of a braid 10 within the extruded sheath 17 is defined. As shown, the mass distributor 3 is mounted in the extruder head by means of securing means 4. The outer die 5 is mounted to the extruder outlet by means of outer die securing means 6. The spacing between the inner die 7 and braid guiding means 8 should be chosen in accordance with the desired braid thickness. It is important that this spacing is so small that there will be no flow of mass in the opposite direction, i.e. to the right in the drawing. Examples of positioning of the braid 10 within the extruded sheath 17 are illustrated in Figures 2, 3 and 4.

The braid guiding means or tube 8 is secured to a tube section 9 which is fixed to tube-securing means 15. The diameter of this tube 9 should be so large that it can be used for all cable diameters produced in this cable manufacturing line. The inner diameter of the tube 8 should be a little larger than the diameter of the cable core 16.

A braid handling arrangement 11, 12, 13 and 14 is shown. Braid braking or stretching means 11 is designed to determine the tension in the braid 10 before it comes in contact with the mass or sheath material. This tension will also to a certain extent influence the positioning of the braid in the sheath. Whereas the braid 10 may be prefabricated in a separate process, it may also as illustrated, be made in tandem with the sheath extruder. Braid-making means 14 is illustrated schematically. The number of strings or elements in the braid may be varied, as well as the braid angle. Braid feeding means 13 ensures that the braid is placed correctly on the tube section 9. Between the braid stretching means 11 and the braid feeding means 13 there is arranged a braid buffer 12. This buffer should be large enough to allow continuous operation of the extruder while empty reels are exchanged with full reels in the braid making means. If it is decided to use prefabricated braid, the required length of such a braid should be held in the buffer zone while feeding one end of it through the braid feeding means 13. Examples of braid angles are illustrated in Figures 5 and 6. The braid configuration may be varied widely. What is important, however, is that the braid should have relatively open masks so as to allow the mass to flow through the masks and completely embed the braid within the sheath.

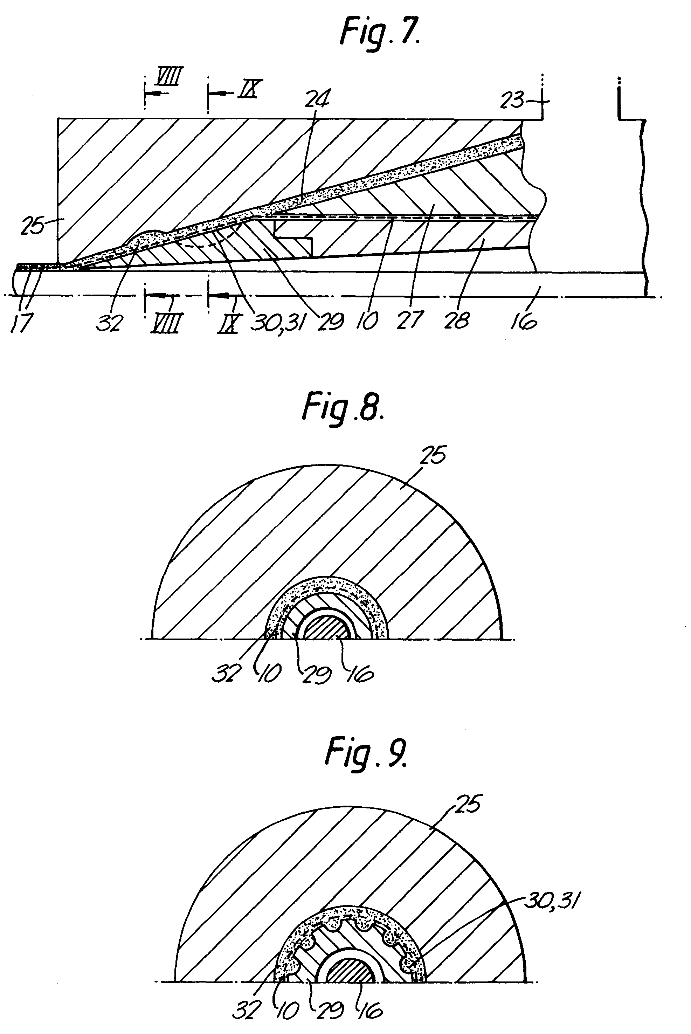

In Figure 7 there are illustrated in more detail essential features of the die area. A section through a part of the die area is hatched to show the details more clearly. The cable core 16 is provided with a reinforced sheath 17 in which there is embedded a braid 10. The extruded mass passes from the mass inlet 23 through a main flow path 24 and via at least one mass flow deflector 30, 31, 32 until it reaches the extruder outlet defined by an outer die 25 and extended tube means 29. The extended tube means 29 is secured to braid-supporting tube means 28. The main mass flow path 24 is defined by the outer die 25 and the inner die 27 in combination with the extended tube means 29. The tube means 29 is provided with a mass flow deflector 30 as indicated. When the mass flow reaches the extruded tube means 29 it will be partly deflected by the mass flow deflector 30 into mass flow paths (illustrated also in Figure 9) underneath the braid 10. The deflected paths provided by the deflector 30 are gradually reduced in depth towards the outlet, where the tube means 29 has a circular surface (Figure 8). As shown, the deflector 30 may be realised as grooves 31 in the outer surface of the tube 29. It may be necessary, in order to have full control of the mass flow, also to have deflector means 32 arranged in the outer die 25.

Figures 8 and 9 are cross-sections of the die area shown in Figure 7 taken at lines VIII-VIII and IX-IX. Figure 8 illustrates a cross-section taken at the largest diameter of the deflector 32, whereas Figure 9 illustrates the grooves 31 of the deflector 30. The main purpose of the deflector 30 is to force the mass from the path 24 down through the open masks of the braid so that when the deflected path(s) merge with the main path 24 at a position closer to the die outlet, the deflected mass flow will at least partly remain on the lower side of the braid to ensure that the braid is fully embedded at a desired diametrical position within the sheath. By designing the deflectors 30 and 32 correctly relative to the type of mass used, the extrusion speed, the thickness of the sheath, the type of braid used including its thickness and the mask configuration and other factors, it will be possible to obtain a reinforced cable in which the braid is fully embedded at a desired diametric position.

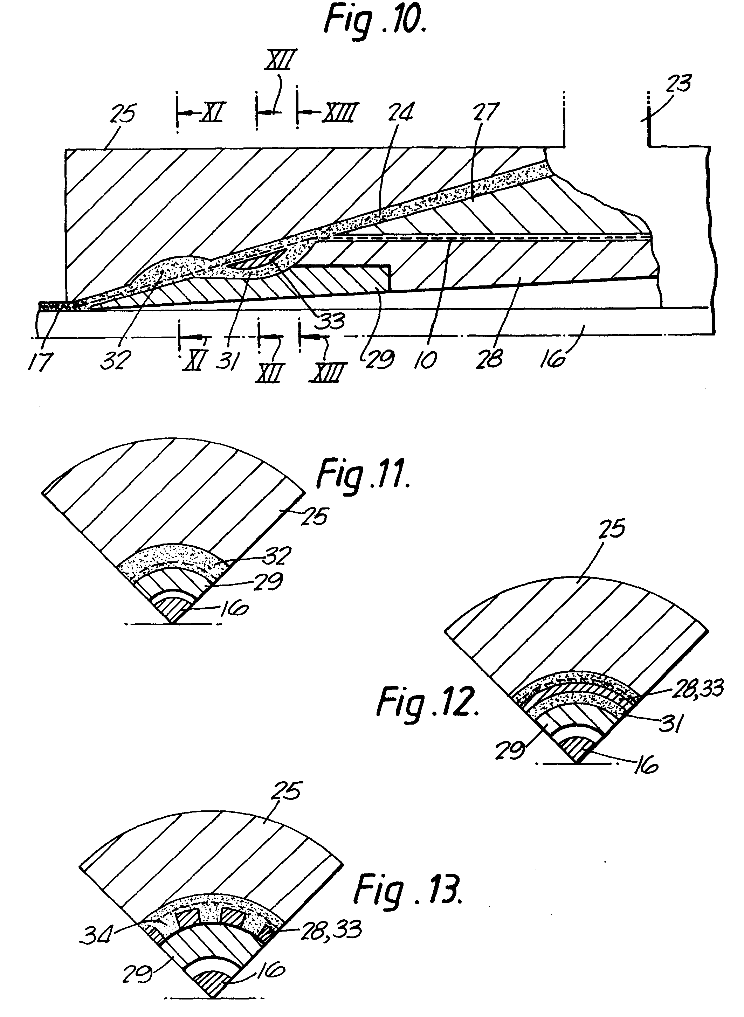

Figure 10 shows an alternative to Figure 7 in which the mass flow is deflected also by means of a deflector 33 arranged on or as part of the braid supporting tube means 28.

Cross-sections of the die area of Figure 10 taken along lines XI-XI, XII-XII and XIII-XIII, are illustrated in Figures 11, 12 and 13 respectively.

Figure 11 is similar to Figure 8 in showing the deflector 32. Whereas the cross-section of the deflector 32 is shown as a circular surface, the surface defining the mass flow may alternatively be grooved like the arrangements described in connection with the deflector 30.

Figures 12 and 13 illustrate cross-sections through the deflector 33. As shown in Figure 12 this deflector 33 which may be a part of the tube means 28, resembles a circular ring. Grooves 31 are as in the example shown in Figures 7-9 arranged in the extended tube means 29 (Figure 12). These grooves 31 correspond with the grooves (or holes) 34 arranged in the tube means 28 to define the deflector means combination 30, 31, 33.

The braids described are preferably made of insulation strings or elements like glass fibre, Kevlar or other synthetic material. There are,

0215632

however, no limits to the type of elements used. Cotton, silk or nylon elements may be suitable. The braid may also include,. wholly or partly elements made of metal, non-insulated or insulated.

CLAIMS:

1. Method of making a cable (16) having reinforcement elements embedded in a protective outer sheath (17) of plastic/rubber by using a sheath extruder, characterised in that the reinforcement elements are arranged around the cable core in the form of a braid (10) having open masks, at the same time as the cable core is entering the extruder head (1), that the braid (10) is supported within the extruder head so that it is somewhat larger in diameter than the cable core, and that the plastics/rubber mass is applied to the extrusion area with a pressure high enough to allow parts of the mass to flow through the masks and fully embed the braid (10) within the sheath (17).

2. Apparatus for performing the method of claim 1, characterised in that the braid (10) is supported on a tube (8; 28, 29) extended into the extrusion area (5, 7; 25, 27).

3. Apparatus according to claim 2, characterised in that the tube (8, 28) includes a tube section (9, 29) on which the braid (10) may be accumulated before entering the extruder.

4. Apparatus according to claim 3, characterised in that braid stretching means (11) are provided for ensuring that the braid (10) maintains a desired diametric position when leaving the supporting tube (8, 28).

5. Apparatus according to claim 2, characterised in that braid making means (14) is arranged in tandem with the extruder.

6. Apparatus according to claim 2, characterised in that it includes a mass flow path (24) defined by an outer die (25) and an inner die (27), extended tube means (29), and at least one mass flow deflector means (30, 31,. 32, 33) defining at least one deflected mass flow path.

7. Apparatus according to claim 6, characterised in that it includes lower mass flow deflectors (30, 31, 33) defining a mass flow through the open masks of the braid (10) to the lower side of the braid.

8. Apparatus according to claim 6 or 7, characterised in that it includes at least one upper mass flow deflector (32) defining the mass flow at the upper side of the braid (10).

9. Apparatus according to claim 6, characterised in that the mass flow deflectors (30, 31, 33) include a number of grooves (31) arranged in the tube means (28, 29).

10. Apparatus according to claim 7, 8 or 9, characterised in that the deflected mass flow path defined by the lower deflectors (30, 31, 33) merges with the main flow path (24) at a place close to the upper mass flow deflector (32).

*Fig .1.*

1/4

Fig.2.

Fig.3.

Fig.4.

Fig.5.

Fig.6.

Fig.7.

Fig.8.

Fig.9.

4'4

**Fig .10.**

**Fig .11.**

**Fig .12.**

**Fig .13.**